# DEMANDE DE BREVET EUROPEEN

(11) **EP 3 564 102 A1**
(43) Date de publication de la demande: **06.11.2019**
(21) Numéro de dépôt: 19172521.7
(22) Date de dépôt: 03.05.2019
(51) Int. Cl.: B62J 11/00, B65D 23/08

(54) **CORPS DE PROTECTION POUR GOURDE DE CYCLISTE ET PORTE-GOURDE LE COMPRENANT**

(30) Priorité: 04.05.2018 FR 1853881
(71) Demandeur: Hamadi, Nourrédine, 74150 Vallieres (FR)
(72) Inventeur: Hamadi, Nourrédine, 74150 Vallieres (FR)
(74) Mandataire: Cabinet Poncet

(57) **Abrégé**

Corps de protection (1) pour gourde cycliste, comprenant une base (2) comportant des moyens d'attachement (3) sur un cadre de vélo, ladite base (2) s'allongeant selon une direction longitudinale (I-I) entre une première extrémité (2a) et une deuxième extrémité (2b), le corps de protection (1) comportant un logement creux (8) destiné à recevoir et recouvrir au moins en partie la gourde cycliste (14, 15), dans lequel :
- à sa première extrémité (2a), la base (2) se raccorde à un premier tronçon de paroi latérale protectrice (6) présentant une forme sensiblement tronconique se développant selon un secteur angulaire de 180 degrés autour d'une direction transversale (II-II) sensiblement perpendiculaire à la direction longitudinale (I-I),
- la base (2) se raccorde à un second tronçon de paroi latérale protectrice (7) qui prolonge le premier tronçon de paroi latérale protectrice (6) en direction de la deuxième extrémité (2b), le second tronçon de paroi latérale protectrice (7) présentant, en coupe transversale, une forme sensiblement en vé,
- l'ensemble formé par la base (2) et la paroi latérale protectrice (6, 7) définissant ledit logement creux (8) destiné à recevoir et recouvrir au moins en partie la gourde cycliste.

## Description

La présente invention concerne le domaine du cyclisme, et concerne plus particulièrement un corps de protection pour gourde de cycliste destiné à protéger ladite gourde des éclaboussures.

Les gourdes de cyclistes sont généralement tenues à disposition des cyclistes dans des moyens de réception et de tenue de gourde qui sont fixés sur le cadre du vélo. Les gourdes se trouvent ainsi à portée de main immédiate des cyclistes, lesquels boivent généralement à l'aide d'une seule main et sans arrêter leur vélo.

Lorsque le terrain sur lequel évolue le cycliste est humide, la roue avant du vélo projette des impuretés, telles que de la boue, et la gourde se trouve sur le chemin des projections. La tétine de la gourde se trouve ainsi souillée. Les cyclistes buvant sans s'arrêter et manipulant leur gourde d'une seule main ne sont ainsi pas en mesure de nettoyer facilement et convenablement la tétine de leur gourde avant de la mettre en bouche. Il en résulte un manque d'hygiène se manifestant notamment par la génération d'aphtes en bouche du cycliste.

Pour limiter ce problème, il a été proposé des gourdes à capuchon articulé venant recouvrir la tétine. Ces capuchons sont toutefois difficiles à ouvrir et fermer d'une seule main et compliquent l'accès à la tétine.

Le document DE 41 10 221 A1 décrit un corps de protection pour gourde cycliste selon le préambule de la revendication 1. Ce corps de protection comporte un capuchon destiné à recevoir la tétine de la gourde de cycliste. Le capuchon est en forme de cloche à section transversale circulaire se développant selon un secteur angulaire de 360 degrés autour d'une direction parallèle à la direction longitudinale. La paroi du capuchon en forme de cloche est légèrement étendue selon la direction longitudinale en direction de la deuxième extrémité au niveau du rail formant la base. Le tronçon de paroi latérale étendant le capuchon en forme de cloche selon la direction longitudinale a ainsi nécessairement une section transversale circulaire.

Du fait de sa forme continue sur un secteur angulaire de 360 degrés, le capuchon en cloche rend le retrait de la gourde complexe en obligeant l'utilisateur à effectuer une préhension de la gourde au niveau de sa partie inférieure (souillée car non protégée, donc glissante), un mouvement de rotation suivi d'un mouvement de translation. L'introduction, par une même préhension et des mouvements inverses, est tout aussi compliquée. De plus, le tronçon de paroi latérale étendant le capuchon en forme de cloche selon la direction longitudinale, à section transversale circulaire, empêche lors d'un retrait une bonne préhension de la gourde au niveau de sa partie supérieure (là où sont généralement prévus des reliefs à cet effet, tels que des creux annulaires) et gêne les doigts de l'utilisateur lors d'une réintroduction dans le logement creux.

Un problème proposé par la présente invention est de protéger efficacement une gourde cycliste des projections provenant de la roue avant, tout en maintenant un accès facile et rapide à ladite gourde pour une manipulation et une ouverture d'une seule main.

Pour atteindre ces objets ainsi que d'autres, l'invention propose un corps de protection pour gourde cycliste, comprenant une base comportant des moyens d'attachement sur un cadre de vélo, ladite base s'allongeant selon une direction longitudinale entre une première extrémité et une deuxième extrémité, le corps de protection comportant un logement creux destiné à recevoir et recouvrir au moins en partie la gourde cycliste, dans lequel :
- à sa première extrémité, la base se raccorde à un premier tronçon de paroi latérale protectrice présentant une forme sensiblement tronconique se développant selon un secteur angulaire de 180 degrés autour d'une direction transversale sensiblement perpendiculaire à la direction longitudinale,
- la base se raccorde à un second tronçon de paroi latérale protectrice qui prolonge le premier tronçon de paroi latérale protectrice en direction de la deuxième extrémité, le second tronçon de paroi latérale protectrice présentant, en coupe transversale, une forme sensiblement en vé,
- l'ensemble formé par la base et la paroi latérale protectrice définissant ledit logement creux destiné à recevoir et recouvrir au moins en partie la gourde cycliste.

Un tel corps présente une forme à même de protéger efficacement une gourde de cycliste, sans pour autant gêner l'accès du cycliste à sa gourde en utilisant une seule main.

Le premier tronçon de paroi latérale protectrice à forme sensiblement tronconique se développant selon un secteur angulaire de 180 degrés autour d'une direction transversale sensiblement perpendiculaire à la direction longitudinale est destiné à recevoir la partie supérieure de la gourde. Par sa forme et son orientation, le premier tronçon de paroi latérale protectrice protège efficacement la partie supérieure de la gourde (notamment la tétine) des éclaboussures sans pour autant gêner l'accès latéral du cycliste à la partie supérieure de la gourde (que saisit généralement le cycliste avec sa main) ni gêner l'extraction et l'introduction latérale (avec un déplacement en partie sensiblement perpendiculairement à la direction longitudinale) de la gourde dans le logement creux.

La forme sensiblement en vé du second tronçon de paroi latérale protectrice permet un guidage intuitif de la main du cycliste lorsqu'il cherche à saisir sa gourde. Et cette forme en vé facilite également la remise en place de la gourde par le cycliste en guidant latéralement cette dernière.

On comprend que, grâce à la forme sensiblement tronconique du premier tronçon de paroi latérale protectrice et à la forme sensiblement en vé du second tronçon de paroi latérale protectrice, les bords desdits premier et deuxième tronçons de paroi latérale protectrice s'écartent de la surface extérieure d'une gourde lorsqu'elle est engagée dans le logement creux du corps de protection, permettant la pénétration des doigts de l'utilisateur et facilitant l'accès à la gourde pour sa manipulation. Simultanément, l'écartement des bords desdits premier et deuxième tronçons de paroi latérale protectrice favorise la protection de la gourde contre les projections.

Avantageusement, on peut prévoir que, à la première extrémité de la base, le logement creux a une hauteur comprise entre environ 30 mm et environ 45 mm, et de préférence entre 35 mm et 39 mm.

Une telle hauteur de logement creux procure un compromis satisfaisant entre une bonne protection de la gourde contre les éclaboussures et une bonne accessibilité par le cycliste.

De préférence, l'angle d'ouverture du vé peut être compris entre environ 70 degrés et environ 110 degrés, de préférence entre 85 degrés et 95 degrés. Un tel angle d'ouverture du vé procure une bonne accessibilité par le cycliste.

Avantageusement, la base peut comporter une surface intérieure à profil transversal en arc de cercle. Les gourdes de cyclisme étant généralement à section transversale circulaire, le profil transversal en arc de cercle de la surface intérieure de la base permet un contact par complémentarité (au moins approximative) de forme avec une réception de la gourde tout au fond du logement creux afin de mieux protéger la gourde.

De préférence, la base peut comporter une surface intérieure à profil transversal en arc de cercle de rayon compris entre environ 35 mm et environ 40 mm. Un tel rayon permet de recevoir la plupart des gourdes de cycliste avec une bonne complémentarité de forme.

Avantageusement, la hauteur du second tronçon de paroi latérale protectrice peut diminuer progressivement en direction de la deuxième extrémité de la base. Une telle diminution permet de réduire l'encombrement du corps de protection pour limiter les risques de conflit avec les mollets du cycliste.

Selon un autre aspect de la présente invention, il est proposé un porte-gourde pour gourde de cycliste, comportant :
- un corps de protection tel que décrit précédemment,
- des moyens de réception et de tenue de gourde destinés à recevoir et tenir la gourde de cycliste dans le logement creux du corps de protection.

Un tel porte gourde peut être fabriqué en une seule pièce, ou en plusieurs pièces (par exemple avec un corps de protection séparé des moyens de réception et de tenue de gourde).

De préférence, les moyens de réception et de tenue de gourde peuvent comporter :
- une butée destinée à recevoir en appui longitudinal le fond de la gourde,
- une structure de retenue destinée à venir au moins en partie autour de la gourde.

Avantageusement, la distance longitudinale entre la butée et la zone de raccordement des premier et deuxième tronçons de paroi latérale protectrice est comprise entre environ 180 mm et environ 200 mm, ou est comprise entre environ 220 mm et environ 240 mm. De telles dimensions s'avèrent compatibles avec la plupart des gourdes existant sur le marché.

De préférence, on peut prévoir que :
- les moyens de réception et de tenue de gourde comportent un socle,
- la base du corps de protection est conformée pour recevoir le socle dans au moins une première position, dans laquelle la butée et la zone de raccordement des premier et deuxième tronçons de paroi latérale protectrice sont distantes longitudinalement d'une première distance, et une deuxième position dans laquelle la butée et la zone de raccordement des premier et deuxième tronçons de paroi latérale protectrice sont distantes longitudinalement d'une deuxième distance, la deuxième distance étant plus grande que la première distance.

On peut ainsi facilement adapter la distance entre la butée et la zone de raccordement des premier et deuxième tronçons de paroi latérale protectrice pour recevoir et protéger convenablement les différentes tailles de gourde de cyclisme.

On peut avantageusement prévoir à cet effet que :
- la première distance est comprise entre environ 180 mm et environ 200 mm,
- la deuxième distance est comprise entre environ 220 mm et environ 240 mm.

De préférence, la base du corps de protection peut comporter un canal apte à recevoir le socle à coulissement selon la direction longitudinale. Le canal permet un guidage à coulissement du socle et une orientation fiable des moyens de réception et de tenue de gourde par rapport au corps de protection.

Avantageusement, on peut prévoir que :
- l'un de la base ou du socle comporte au moins deux trous décalés l'un à l'écart de l'autre selon la direction longitudinale, tandis que l'autre de la base ou du socle comporte au moins un trou,
- dans l'une et l'autre des première et deuxième positions, au moins un trou de la base se trouve en correspondance d'un trou du socle pour le passage d'une vis permettant simultanément un blocage en position et une fixation au cadre de vélo.

La position relative entre les moyens de réception et de tenue de gourde et le corps de protection peut ainsi être rapidement et facilement adaptée. Il est par ailleurs fait astucieusement usage de vis coopérant avec des trous filetés du cadre de vélo (qui sont un standard), pour une fixation compacte et universelle.

D'autres objets, caractéristiques et avantages de la présente invention ressortiront de la description suivante de modes de réalisation particuliers, faite en relation avec les figures jointes, parmi lesquelles :
- la figure 1 est une vue de face d'un mode de réalisation particulier de corps de protection selon la présente invention ;
- la figure 2 est une vue de côté du corps de protection de la figure 1 ;
- la figure 3 est une vue en perspective du corps de protection de la figure 1 ;
- la figure 4 est une vue de droite du corps de protection de la figure 1 ;
- la figure 5 est une vue schématique en coupe d'un premier mode de réalisation de porte-gourde selon la présente invention, comportant un corps de protection de la figure 1 ;
- la figure 6 est une vue en perspective éclatée d'un deuxième mode de réalisation de porte-gourde selon la présente invention ;
- la figure 7 est une vue en perspective du porte-gourde de la figure 6, avec les moyens de réception et de tenue de gourde et le corps de protection disposés en une première position ;
- la figure 8 est une vue en perspective du porte-gourde de la figure 6, avec les moyens de réception et de tenue de gourde et le corps de protection disposés en une deuxième position ;
- la figure 9 est une vue schématique en coupe du porte-gourde de la figure 7 sur un cadre de vélo.

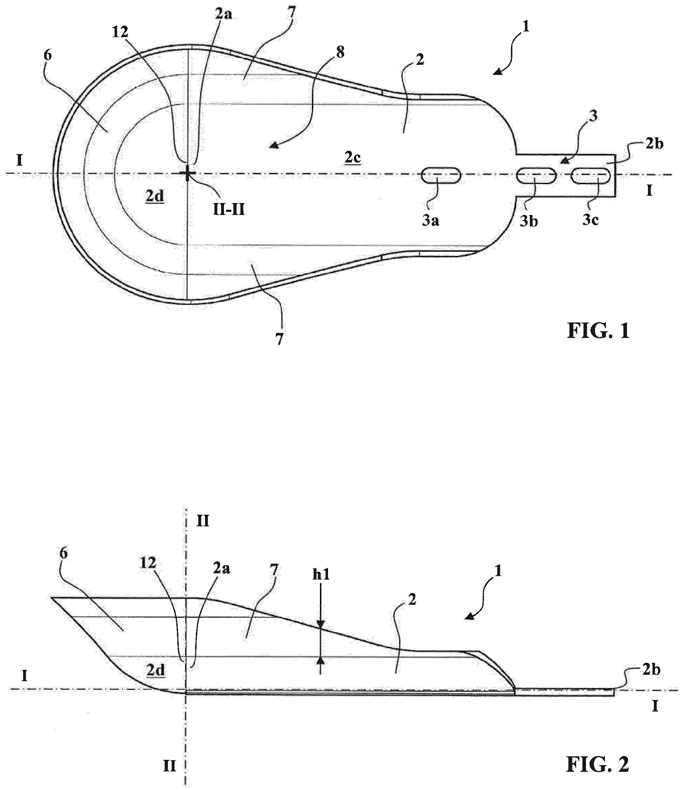

Sur les figures 1 à 5 est illustré un mode de réalisation particulier de corps de protection 1 selon la présente invention, destiné à protéger des éclaboussures une gourde de cycliste.

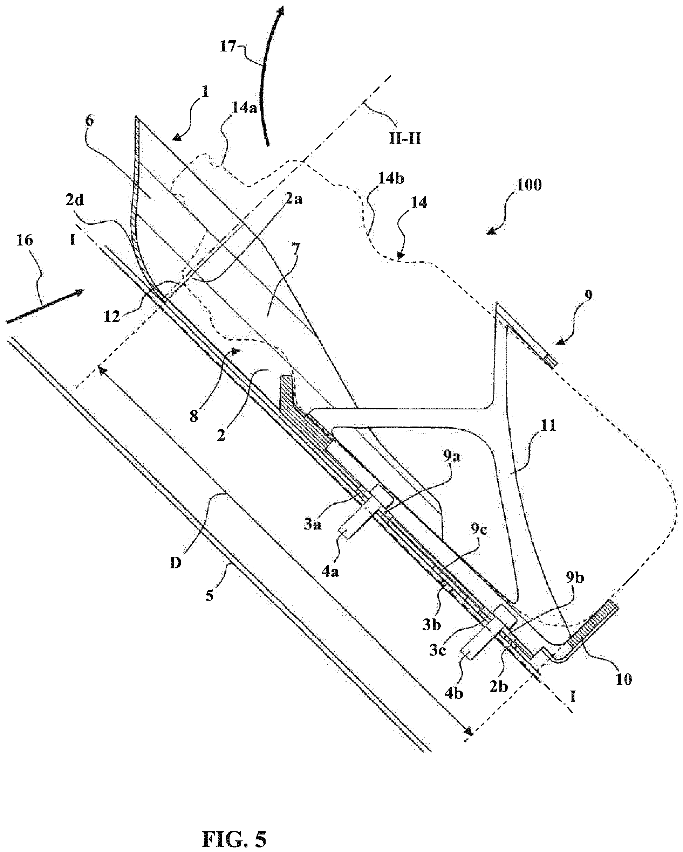

Le corps de protection 1 comprend une base 2 comportant des moyens d'attachement 3 sur un cadre de vélo. Les moyens d'attachement comportent ici trois trous 3a à 3c permettant l'engagement de vis 4a et 4b pour une fixation sur le cadre 5 d'un vélo (figure 5).

La base 2 s'allonge selon une direction longitudinale I-I entre une première extrémité 2a et une deuxième extrémité 2b.

A sa première extrémité 2a, la base 2 se raccorde à un premier tronçon de paroi latérale protectrice 6 présentant une forme sensiblement tronconique se développant selon un secteur angulaire de 180 degrés. Le premier tronçon de paroi latérale protectrice 6 se développe autour d'une direction transversale II-II sensiblement perpendiculaire à la direction longitudinale I-I, en s'évasant à l'écart de la base 2.

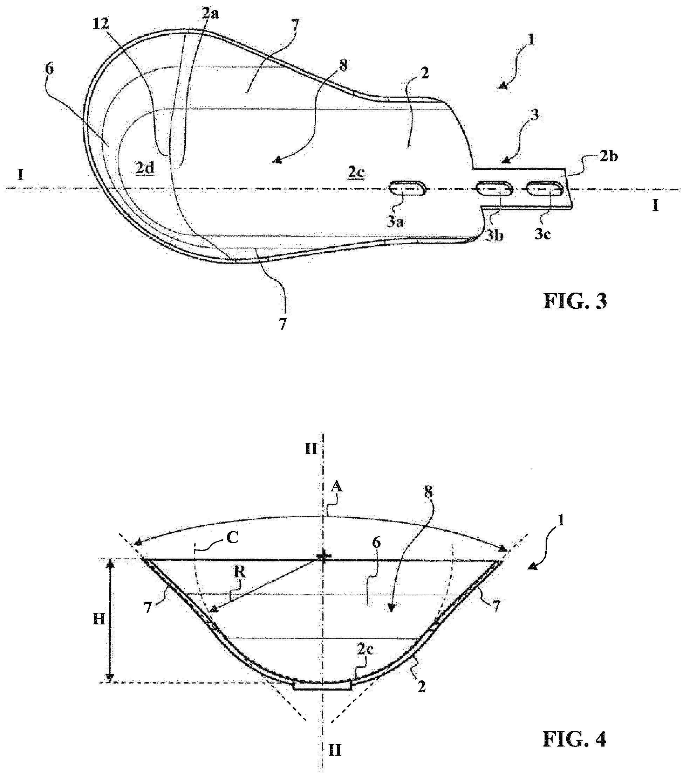

Un second tronçon de paroi latérale protectrice 7 prolonge le premier tronçon de paroi latérale protectrice 6 en direction de la deuxième extrémité 2b, le second tronçon de paroi latérale protectrice 7 présentant, en coupe transversale, une forme sensiblement en vé (figure 4).

L'ensemble formé par la base 2 et la paroi latérale protectrice (formée par les premier et second tronçons 6 et 7) définit un logement creux 8 destiné à recevoir et recouvrir au moins en partie la gourde cycliste (voir figure 5).

De façon plus précise, le premier tronçon de paroi latérale protectrice 6 sensiblement tronconique comporte un sommet arrondi se présentant sous la forme d'une demi-calotte sphérique 2d qui assure le raccordement entre la base 2 et la partie tronconique du premier tronçon de paroi latérale protectrice 6.

On voit plus particulièrement sur la figure 4 que, à la première extrémité 2a de la base 2, le logement creux 8 a une hauteur H comprise entre environ 30 mm et environ 45 mm. La hauteur H est de préférence comprise entre 35 mm et 39 mm.

Toujours sur la figure 4, on voit que l'angle d'ouverture A du vé est compris entre environ 70 degrés et environ 110 degrés. L'angle d'ouverture A est de préférence compris entre 85 degrés et 95 degrés.

La base comporte une surface intérieure 2c à profil transversal en arc de cercle C de rayon R. Le rayon R est de préférence compris entre environ 35 mm et environ 40 mm.

On voit plus particulièrement sur la figure 2 que la hauteur h1 du second tronçon de paroi latérale protectrice 7 diminue progressivement en direction de la deuxième extrémité 2b de la base 2.

Sur la figure 5 est illustré un premier mode de réalisation particulier de porte-gourde 100 pour gourde de cycliste 14 (illustrée en traits discontinus et dont la forme n'est aucunement limitative), comportant :
- un corps de protection 1 tel que représenté sur les figures 1 à 4,
- des moyens de réception et de tenue de gourde 9 destinés à recevoir et tenir la gourde de cycliste 14 dans le logement creux 8 du corps de protection 1.

Les moyens de réception et de tenue de gourde 9 peuvent être des moyens existants sur le marché. Ceux-ci sont fixés à un cadre 5 de vélo par l'intermédiaire de deux vis 4a et 4b engagées dans des trous 9a et 9b ménagés dans un socle 9c.

Les moyens de réception et de tenue de gourde 9 comportent :
- une butée 10 destinée à recevoir en appui longitudinal le fond de la gourde 14,
- une structure de retenue 11 destinée à venir au moins en partie autour de la gourde 14 pour la retenir près de la base 2.

Le corps de protection 1 est intercalé entre le cadre 5 et le socle 9c des moyens de réception et de tenue de gourde 9. Les vis 4a et 4b servant à la fixation des moyens de réception et de tenue de gourde 9 servent également à la fixation du corps de protection 1 en étant engagées dans les trous 3a et 3c.

Pour mettre en place le corps de protection 1, l'utilisateur retire les vis 4a et 4b et dispose le corps de protection 1 sous les moyens de réception et de tenue de gourde 9 avec les trous 3a et 3c en correspondance de trous 9a et 9b ménagés dans les moyens de réception et de tenue de gourde 9. L'utilisateur insère ensuite la vis 4a simultanément dans les trous 3a et 9a, et insère la vis 4b simultanément dans les trous 3c et 9b, puis visse les vis 4a et 4b dans le cadre jusque dans la position illustrée sur la figure 5.

Lorsque les vis 4a et 4b sont respectivement insérées dans les trous 3a et 9a d'une part et 3c et 9b d'autre part, le socle 9c est dans une première position par rapport au corps de protection 1. La distance longitudinale D entre la butée 10 et la zone de raccordement 12 des premier 6 et deuxième 7 tronçons de paroi latérale protectrice est alors avantageusement comprise entre environ 180 mm et environ 200 mm. Une telle distance longitudinale D permet de recevoir et protéger la première gourde cycliste 14 présentant une première longueur.

En alternative, pour recevoir et protéger une deuxième gourde cycliste ayant une deuxième longueur (supérieure à la première longueur), le socle 9c peut être disposé dans une deuxième position par rapport au corps de protection 1. Pour ce faire, la vis 4a peut être insérée dans les trous 3b et 9a tandis que la vis 4b n'est insérée que dans le trou 9b. Une éventuelle entretoise (rondelle par exemple) peut être prévue entre le cadre et le socle 9c, au niveau de la vis 4b, afin de maintenir le socle 9c parallèle au cadre 5.

En deuxième position, la pression induite par le vissage de la vis 4a peut suffire à maintenir correctement le corps de protection 1 et le socle 9c des moyens de réception et de tenue de gourde 9 alignés selon la direction longitudinale I-I. En alternative ou en complément, on peut prévoir des moyens aptes à maintenir un tel alignement, tels que des ergots faisant saillie sur la surface intérieure 2c de la base 2 et entre lesquels vient en appui le socle 9c.

En deuxième position, la distance longitudinale D entre la butée 10 et la zone de raccordement 12 des premier 6 et deuxième 7 tronçons de paroi latérale protectrice est avantageusement comprise entre environ 220 mm et environ 240 mm.

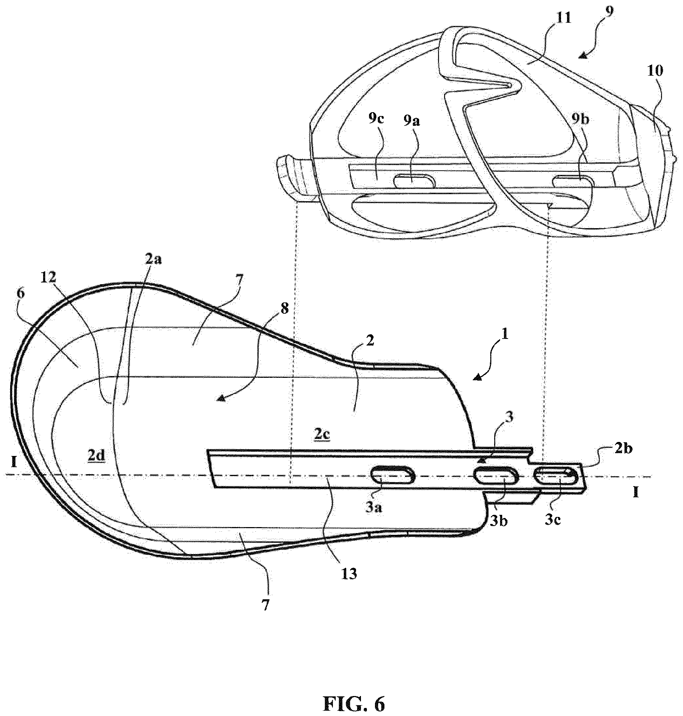

Sur les figures 6 à 9 est illustré un deuxième mode de réalisation particulier de porte-gourde 100 pour gourde de cycliste, comportant :
- un corps de protection 1 tel que représenté sur les figures 1 à 4,
- des moyens de réception et de tenue de gourde 9 destinés à recevoir et tenir la gourde de cycliste dans le logement creux 8 du corps de protection 1.

Les moyens de réception et de tenue de gourde 9 sont identiques à ceux illustrés sur la figure 5, de sorte que les mêmes références numériques s'appliquent.

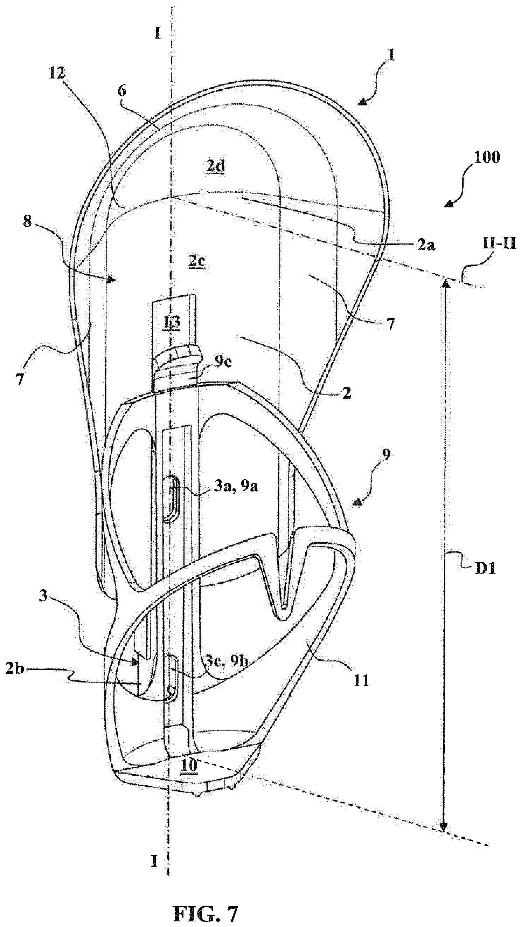

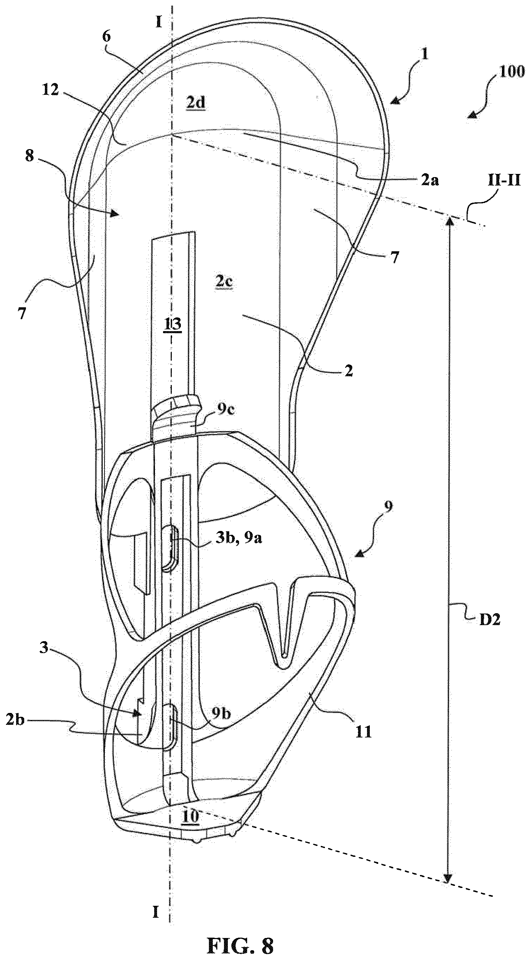

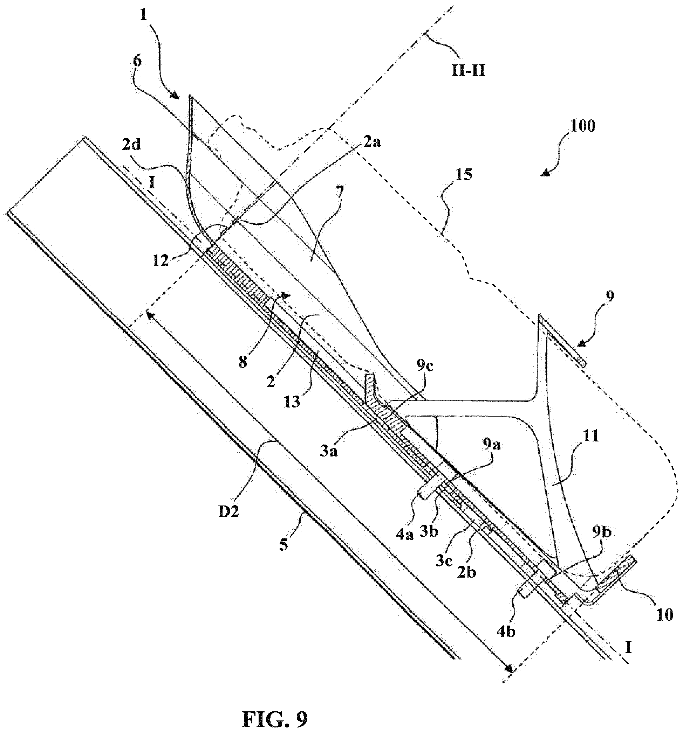

Tout comme dans le premier mode de réalisation de la figure 5, la base 2 du corps de protection 1 est également conformée pour recevoir le socle 9c dans au moins une première position (figure 7), dans laquelle la butée 10 et la zone de raccordement 12 des premier 6 et deuxième 7 tronçons de paroi latérale protectrice sont distantes longitudinalement d'une première distance D1, et une deuxième position (figures 8 et 9) dans laquelle la butée 10 et la zone de raccordement 12 des premier 6 et deuxième 7 tronçons de paroi latérale protectrice sont distantes longitudinalement d'une deuxième distance D2, la deuxième distance D2 étant plus grande que la première distance D1. En deuxième position, le porte-gourde 100 reçoit une deuxième gourde cycliste 15 (illustrée en traits discontinus sur la figure 9, et dont la forme n'est aucunement limitative) présentant une deuxième longueur qui est supérieure à la première longueur de la première gourde 14.

La première distance D1 est avantageusement comprise entre environ 180 mm et environ 200 mm. La deuxième distance D2 est avantageusement comprise entre environ 220 mm et environ 240 mm.

Le corps de protection 1 de ce mode de réalisation se distingue en ce que, pour recevoir le socle 9c, la base 2 du corps de protection 1 comporte un canal 13 (plus particulièrement visible sur les figures 6 à 8) apte à recevoir le socle 9c à coulissement selon la direction longitudinale I-I. Le canal 13 permet de guider à coulissement le socle 9c et d'orienter celui-ci de façon fiable pour une bonne orientation longitudinale des moyens de réception et de tenue de gourde 9 par rapport au corps de protection 1.

De façon plus précise, le canal 13 présente ici une section transversale intérieure en U complémentaire de la section transversale extérieure (rectangulaire) du socle 9c pour recevoir ce dernier avec un faible jeu transversal.

Dans la première position (figure 7), les trous 9a et 3a sont placés en correspondance pour recevoir la vis 4a, tandis que les trous 9b et 3c sont placés en correspondance pour recevoir la vis 4b.

Dans la deuxième position (figures 8 et 9), les trous 9a et 3b sont placés en correspondance pour recevoir la vis 4a. Le trou 9b n'est disposé en correspondance d'aucun trou de la base 2.

Dans les deux modes de réalisation de porte-gourde 100 illustrés sur les figures 5 à 9, on constate que :
- la base 2 comporte au moins deux trous 3a et 3b décalés l'un à l'écart de l'autre selon la direction longitudinale I-I, tandis que le socle 9c comporte au moins un trou 9a,
- dans l'une et l'autre des première et deuxième positions, au moins un des trous 3a et 3b décalés l'un à l'écart de l'autre selon la direction longitudinale I-I se trouve en correspondance du trou du socle 9c pour le passage d'une vis 4a permettant simultanément un blocage en position et une fixation au cadre 5 de vélo.

On pourrait toutefois prévoir une configuration inverse dans laquelle :
- le socle 9c comporte au moins deux trous décalés l'un à l'écart de l'autre selon la direction longitudinale I-I, tandis que la base comporte au moins un trou,
- dans l'une et l'autre des première et deuxième positions, au moins un des trous décalés l'un à l'écart de l'autre selon la direction longitudinale I-I se trouve en correspondance du trou de la base 2 pour le passage d'une vis permettant simultanément un blocage en position et une fixation au cadre 5 de vélo.

L'utilisation du corps de protection 1 va désormais être expliquée au moyen de la figure 5 illustrant le porte-gourde 100.

La première gourde 14 se trouve initialement dans les moyens de réception et de tenue de gourde 9, en étant reçue dans le logement creux défini par l'ensemble formé par la base 2 et la paroi latérale protectrice (premier 6 et second 7 tronçon de paroi latérale protectrice).

Le premier tronçon de paroi latérale protectrice (6) protège efficacement la partie supérieure de la gourde 14 (notamment la tétine 14a) des éclaboussures qui sont généralement projetées selon un mouvement illustré par la flèche 16.

Lorsque le cycliste souhaite boire, celui-ci approche latéralement sa main (selon un mouvement en partie sensiblement perpendiculairement à la direction longitudinale I-I) pour saisir la partie supérieure de la gourde 14 (où sont généralement prévus des reliefs facilitant la préhension, comme la gorge annulaire 14b). La partie supérieure de la gourde 14 est propre, car elle est bien protégée des éclaboussures par le corps de protection 1, ce qui favorise une préhension fiable.

La forme sensiblement en vé du second tronçon de paroi latérale protectrice 7 permet un guidage intuitif de la main du cycliste lorsqu'il cherche à saisir sa gourde 14.

Après avoir saisi la partie supérieure de la gourde 14, le cycliste extrait celle-ci du logement creux selon un mouvement tel qu'illustré par la flèche 17 comportant au moins une composante de translation selon la direction transversale II-II et allant à l'écart de la base 2. Le premier tronçon de paroi latérale protectrice 6, à forme sensiblement tronconique se développant selon un secteur angulaire de 180 degrés autour de la direction transversale II-II, ne gêne pas ce mouvement d'extraction latéral.

Après avoir bu, le cycliste réintroduit la gourde 14 dans le logement creux et les moyens de réception et de tenue de gourde 9 selon un mouvement inverse à celui illustré par la flèche 17.

La forme en vé du second tronçon de paroi latérale protectrice 7 facilite la remise en place de la gourde 14 par le cycliste en guidant latéralement cette dernière, en autorise un accompagnement fiable de la gourde 14 par la main du cycliste dont les doigts ne viennent pas en conflit avec les bords desdits premier 6 et deuxième 7 tronçons de paroi latérale protectrice. Au contraire, les doigts du cycliste peuvent pénétrer légèrement entre les bords desdits premier 6 et deuxième 7 tronçons de paroi latérale protectrice et la surface extérieure de la gourde 14.

La présente invention n'est pas limitée aux modes de réalisation qui ont été explicitement décrits, mais elle en inclut les diverses variantes et généralisations contenues dans le domaine des revendications ci-après.

## Revendications

1. Corps de protection (1) pour gourde cycliste (14, 15), comprenant une base (2) comportant des moyens d'attachement (3) sur un cadre (5) de vélo, ladite base (2) s'allongeant selon une direction longitudinale (I-I) entre une première extrémité (2a) et une deuxième extrémité (2b), le corps de protection (1) comportant un logement creux (8) destiné à recevoir et recouvrir au moins en partie la gourde cycliste (14, 15), **caractérisé en ce que** :
- à sa première extrémité (2a), la base (2) se raccorde à un premier tronçon de paroi latérale protectrice (6) présentant une forme sensiblement tronconique se développant selon un secteur angulaire de 180 degrés autour d'une direction transversale (II-II) sensiblement perpendiculaire à la direction longitudinale (I-I),
- la base (2) se raccorde à un second tronçon de paroi latérale protectrice (7) qui prolonge le premier tronçon de paroi latérale protectrice (6) en direction de la deuxième extrémité (2b), le second tronçon de paroi latérale protectrice (7) présentant, en coupe transversale, une forme sensiblement en vé,
- l'ensemble formé par la base (2) et la paroi latérale protectrice (6, 7) définissant ledit logement creux (8) destiné à recevoir et recouvrir au moins en partie la gourde cycliste (14, 15).

2. Corps de protection (1) selon la revendication 1, **caractérisé en ce que**, à la première extrémité (2a) de la base (2), le logement creux (8) a une hauteur (H) comprise entre environ 30 mm et environ 45 mm, et de préférence entre 35 mm et 39 mm.

3. Corps de protection (1) selon l'une des revendications 1 ou 2, **caractérisé en ce que** l'angle d'ouverture (A) du vé est compris entre environ 70 degrés et environ 110 degrés, de préférence entre 85 degrés et 95 degrés.

4. Corps de protection (1) selon l'une quelconque des revendications 1 à 3, **caractérisé en ce que** la base (2) comporte une surface intérieure (2c) à profil transversal en arc de cercle.

5. Corps de protection (1) selon la revendication 4, **caractérisé en ce que** la base (2) comporte une surface intérieure (2c) à profil transversal en arc de cercle de rayon (R) compris entre environ 35 mm et environ 40 mm.

6. Corps de protection (1) selon l'une quelconque des revendications 1 à 5, **caractérisé en ce que** la hauteur (h1) du second tronçon de paroi latérale protectrice (7) diminue progressivement en direction de la deuxième extrémité (2b) de la base (2).

7. Porte-gourde (100) pour gourde de cycliste (14, 15), comportant :
- un corps de protection (1) selon l'une quelconque des revendications 1 à 6,
- des moyens de réception et de tenue de gourde (9) destinés à recevoir et tenir la gourde de cycliste (14, 15) dans le logement creux (8) du corps de protection (1).

8. Porte-gourde (100) selon la revendication 7, **caractérisé en ce que** les moyens de réception et de tenue de gourde (9) comportent :
- une butée destinée à recevoir en appui longitudinal le fond de la gourde,
- une structure de retenue destinée à venir au moins en partie autour de la gourde.

9. Porte-gourde (100) selon l'une des revendications 7 ou 8, **caractérisé en ce que** la distance longitudinale (D) entre la butée (10) et la zone de raccordement (12) des premier (6) et deuxième (7) tronçons de paroi latérale protectrice est comprise entre environ 180 mm et environ 200 mm, ou est comprise entre environ 220 mm et environ 240 mm.

10. Porte-gourde (100) selon l'une quelconque des revendications 7 à 9, **caractérisé en ce que** :
- les moyens de réception et de tenue de gourde (9) comportent un socle (9c),
- la base (2) du corps de protection (1) est conformée pour recevoir le socle (9c) dans au moins une première position, dans laquelle la butée (10) et la zone de raccordement (12) des premier (6) et deuxième (7) tronçons de paroi latérale protectrice sont distantes longitudinalement d'une première distance (D1), et une deuxième position dans laquelle la butée (10) et la zone de raccordement (12) des premier (6) et deuxième (7) tronçons de paroi latérale protectrice sont distantes longitudinalement d'une deuxième distance (D2), la deuxième distance (D2) étant plus grande que la première distance (D1).

11. Porte-gourde (100) selon la revendication 10, **caractérisé en ce que** :
- la première distance (D1) est comprise entre environ 180 mm et environ 200 mm,
- la deuxième distance (D2) est comprise entre environ 220 mm et environ 240 mm.

12. Porte-gourde (100) selon l'une des revendications 10 ou 11, **caractérisé en ce que** la base (2) du corps de protection (1) comporte un canal (13) apte à recevoir le socle (9c) à coulissement selon la direction longitudinale (I-I).

13. Porte-gourde (100) selon l'une quelconque des revendications 10 à 12, **caractérisé en ce que** :
- l'un de la base (2) ou du socle (9c) comporte au moins deux trous (3a, 3b) décalés l'un à l'écart de l'autre selon la direction longitudinale (I-I), tandis que l'autre de la base (2) ou du socle (9c) comporte au moins un trou (9a),
- dans l'une et l'autre des première et deuxième positions, au moins un trou (3a, 3b) de la base (2) se trouve en correspondance d'un trou (9a) du socle (9c) pour le passage d'une vis (4a) permettant simultanément un blocage en position et une fixation au cadre (5) de vélo.
